# EUROPÄISCHE PATENTSCHRIFT

(11) **EP 0 413 113 B1**
(45) Veröffentlichungstag und Bekanntmachung des Hinweises auf die Patenterteilung: **26.01.1994**
(21) Anmeldenummer: 90112010.5
(22) Anmeldetag: 25.06.1990
(51) Int. Cl.: A47L 5/22, H02K 9/06

(54) **Elektronisch kommutierter Motor für Staubsauger und dergleichen**
Electronically commutated motor for vacuum cleaner and the like
Moteur commuté électroniquement pour aspirateur de poussière etc.

(30) Priorität: 14.07.1989 DE 3923267
(43) Veröffentlichungstag der Anmeldung: 20.02.1991
(73) Patentinhaber: WAP Reinigungssysteme GmbH & Co., D-89287 Bellenberg (DE)
(72) Erfinder: Oberdorfer-Bögel, Rainer, D-7959 Kirchberg/Iller (DE)
(74) Vertreter: Riebling, Peter, Dr.-Ing.

(56) Entgegenhaltungen:
- EP-A- 0 192 599
- DD-A- 157 886
- DE-B- 1 941 418
- FR-A- 1 204 047
- US-A- 4 527 960

## Beschreibung

Die Erfindung betrifft einen elektronisch kommutierten Motor für Staubsauger oder dergleichen mit einem Stator mit Erregerwicklungen und mit in einem Luftspalt drehend angeordneten Rotor, welcher paketiert Rotorbleche und entsprechend der Polzahl des Stators am Umfang Permagnentmagnete aufweist und weiterhin auf der Rotorwelle ein Lüfterrad als Ventilator vorgesehen ist und die Rotorwelle mit einer Turbine zur Erzeugung eines Ansaugluftstromes in Verbindung steht.

Bei elektrischen Antrieben, insbesondere aber bei Staub- und Schmutzsauger oder dergleichen, sind bereits kommutierte bzw. bürstenlose Motoren bekannt, die mit hoher Leistung arbeiten, nachteilig aber insbesondere in hohen Drehzahlbereichen nicht die notwendige Betriebssicherheit aufweisen. Die bisher bekannten Motoren haben zwar ein hohes Anlaufmoment, weisen aber nachteilig ein relativ ungünstiges Leistungsvolumenverhältnis auf und benötigen viel Platz, insbesondere in Geräten, die manuell handhabbar ausgebildet sind.

Die bisher bekannten Motoren weisen weiterhin den Nachteil auf, daß in Verbindung mit der großen Motorleistung und der dadurch freigesetzten Wärme die Ausgestaltung der Lagerung des Motors, insbesondere wenn zusätzlich eine Turbine angetrieben werden soll ungenügend ausgebildet ist, so daß Gefahr besteht, daß der Motor bzw. die Lagerung heiß läuft, insbesondere hinsichtlich der bisher bekannten, ungenügenden Führung der Kühlluft für den Motor und der Lagerung der angetriebenen Turbine.

Aus der EP 0 192 599 B1 ist bereits ein elektronisch kommutierter Motor bekannt, wobei ebenfalls ein Stator mit Erregerwicklungen sowie ein in einem Luftspalt drehend angeordneter Rotor vorgesehen sind, wobei zur Kühlung des Motors ein Lüfterrad dem Motor nachgeschaltet ist und im weiteren anschließend an das Lagerschild zur Erzeugung eines Vakuums die Schaufelräder einer Turbine angeordnet sind. Bei dem bekannten Motor ist zu Kühlzwecken im Anschluß an das Lüfterrad für die Kühlluft hinter dem Lagerschild ein Ventilator nachgeschaltet, wobei diesem wiederum in feststehender und rotierender Anordnung Lüfterräder des Turbinenläufers nachgeschaltet sind.

Nachteilig hierbei ist es, daß die Lüfterräder der Turbine nicht unmittelbar das Lagerschild selbst mit einem zusätzlichen Kühlluftstrom bestreichen können, insbesondere wil Trennwände in Richtung zum Lagerschild ausgebildet sind.

Aus der DD-A-15 78 86 ist ein weiterer Motor für Staubsauger mit einer Motorgebläseeinheit in Form einer Turbine bekannt, wobei das Lagerschild der Turbine an der Außenseite an Frischluft-Eintrittsöffnungen angeordnet ist. Das Lüfterrad für die Kühlluft des Motors ist jedoch dem Motor vorgeschaltet, so daß die Kühlluft für den Motor nicht zusätzlich auch noch das Lagerschild der Turbine bestreichen kann.

Aufgabe der vorliegenden Erfindung ist es deshalb, einen elektronisch kommutierten Motor so auszugestalten, daß ohne Berücksichtigung des Anlaufmomentes bei hohen Leistungen eine erhöhte Drehzahl erreicht wird bei insbesondere betriebssicherer Ausgestaltung des Motors und der Turbine, ohne daß Gefahr besteht, daß der Motor, die Motorlagerung oder die Turbinenlagerung heiß laufen.

Zur Lösung der Aufgabe ist es gemäß der Erfindung vorgesehen, daß das Lüfterrad auf der Rotorwelle dem Motor in Ansaugrichtung der Kühlluft nachgeschaltet ist und das Lüfterrad hierbei in unmittelbarer Nähe des Turbinenläufers im oberen Lagerschild der Turbine angeordnet ist.

Das Wesen der Erfindung liegt darin, daß das Lüfterrad des Motors, welches am Ventilator liegt, unmittelbar in der Nähe der hochbeanspruchten Turbinenlagerung angeordnet ist, so daß die Kühlluft für den Motor gleichzeitig auch unmittelbar die Turbinenlagerung erreicht, insbesondere über das obere Lagerschild, so daß bei hoher Betriebssicherheit ein Heißlaufen des Motors bzw. der Lagerung des Motors und der Turbine vermieden wird.

Durch die Nachschaltung des Lüfterrades an dem Motor in Ansaugrichtung der Kühlluft durchläuft die Kühlluft zunächst den Motor selbst und kühlt dann nach dem Durchlaufen des Motors noch die obere Motorenlagerung bzw. die unmittelbar daran angrenzende Lagerung des Turbinenläufers, wodurch eine hohe Betriebssicherheit erreicht wird.

Erfindungsgemäß ist es vorgesehen, daß das obere Lagerschild der Turbine zwischen dem Lüfterrad und dem Turbinenläufer nach Art einer Zwischenwand einstückig ausgebildet ist und ausgehend von der Lagerung der Rotorwelle in Richtung zum Lüfterrad Ausnehmungen und Ausformungen aufweist, derart, daß von dem Lagerschild der Turbine gleichzeitig die Auslaßschlitze des Lüfterrades für Kühlluft und die Auslaßöffnungen für die Abluft der Turbine ausgehen.

Von einem einzigen Lagerschild gehen demnach in Verbindung mit Ausnehmungen und Ausformungen gleichzeitig Auslaßschlitze für Kühlluft und Auslaßöffnungen für die Abluft der Turbine aus, so daß hierbei zunächst das Lagerschild selbst , aber insbesondere die Lagerungen im Bereich des Lagerschildes gekühlt werden, hier insbesondere die obere Motorenlagerung und die Lagerung des Turbinenläufers.

Die Auslaßschlitze für Kühlluft und die Auslaßöffnungen für die Abluft der Turbine sind hierbei in Verbindung mit dem einstückig ausgebildeten Lagerschild benachbart angeordnet, so daß in einem engen Bereich der Motorturbinenanordnung ein einheitliches Ausströmen erfolgt, nämlich das Ausströmen der Kühlluft aus den Auslaßschlitzen und das Ausströmen der Abluft der Turbine aus den Auslaßöffnungen, wodurch in sich gegenseitig erhöhender Abführwirkung der Luftströme, weil die Abluft der Turbine gleichzeitig auch Abluft des Lüfterrades wegführt und umgekehrt, eine hohe Kühlleistung von Motor und Lagerung geschaffen wird bei hoher Betriebssicherheit.

In weiterer vorteilhafter Ausgestaltung ist es zur Erhöhung der Betriebssicherheit bei hohen Drehzahlen vorgesehen, daß am Umfang des Rotors nach Art von Ringschalen Permanentmagnete in Aneinanderreihung angeordnet sind, wobei die Längsseiten der Permanentmagnete eine konische Abschrägung aufweisen und in Richtung zur Rotorwelle konisch erweitert ausgebildet sind und hierbei die Permanentmagnete an den Längsseiten ringförmig von stirnseitigen Deckeln des Rotors umfasst werden, die entsprechende konische Abschrägungen entgegengesetzter Neigung aufweisen.

Durch die konischen Abschrägungen der Deckel, welche in die entsprechenden Abschrägungen der Permanentmagneten an den Längsseiten eingreifen, erfolgt bei hohen Drehzahlen ein besonders starker - sich bei erhöhter Zentrifugalkraft noch verstärkender - Verbund der Rotorteile, wobei durch die große mechanische Festigkeit des Rotors eine große Betriebssicherheit erreicht wird.

In Verbindung mit der dargestellten Ausbildung des Rotors ist es vorteilhaft vorgesehen, daß der Luftspalt zwischen den Permanentmagneten und dem Stator in wechselnder Anordnung entsprechend der Polzahl des Stators verengt ausgebildet ist, wobei ausgehend von einer Erreger- bzw. Statorwicklung bis zur darauffolgenden Wicklung eine stetig zunehmende Verengung vorgesehen ist, um einen stets gleichen Anlauf des Motors in Richtung der Verengung zu erzielen.

Demnach ist bei der Erfindung der Luftspalt zwischen dem Rotor und dem Stator nicht konstant ausgebildet sondern vielmehr in wechselnder Anordnung jeweils verengt bzw. verbreitert ausgebildet, so daß erwünscht eine stets gleiche Anlaufrichtung des Motors erfolgt. Diese besondere Luftspaltausbildung bringt auch den Vorteil, daß die Blechpakete des Rotors bzw. des Stators nicht bis in den gesättigten Bereich gefahren werden müssen, sondern sie vorteilhaft im Hinblick auf die Hysterese noch in einem ungesättigten Bereich verlaufen.

An der Rotorwelle sind vorteilhaft ein oder mehrere Permanentmagnete am Umfang angeordnet, wobei Regelimpulse gemäss der Rotation der Rotorwelle über einen Hallsensor einer Frequenzsteuerung zugeführt werden.

Weiterhin ist vorteilhaft eine elektronische Kommutierung des Motors in Verbindung mit einem Frequenzumrichter vorgesehen, wobei eine Steuerfrequenz entsprechend der gewünschten Drehzahl und weiterhin Regelimpulse des Hallsensors Eingängen des Frequenzumrichters zugeführt werden und am Ausgang des Frequenzumrichters über im Gegentakt gesteuerte Endstufen die Statorwicklungen des Motors der Reihe nach angesteuert werden.

Hierbei wird der Vorteil erzielt, daß der Motor - je nach Ansteuerfrequenz - beliebig und sehr schnell in der Drehzahl hochgefahren werden kann, wobei in Verbindung mit der speziellen Kühlung Lagerung des Motors bzw. der Ausgestaltung der Lagerung am oberen Lagerschild und der Ausgestaltung des Rotors mit der konischen Halterung der Permanentmagnete eine besonders hohe Betriebssicherheit erzielt wird.

Von besonderem Vorteil ist die Verwendung des vorgestellten erfindungsgemäßen Motorkonzepts für die Verwendung bei Staubsaugern. Ein derartiger Motor, wie er nach der vorliegenden Erfindung beschrieben wurde verursacht kein Bürstenfeuer, er erfüllt damit in seiner Gesamtheit die sicherheitstechnischen Anforderungen, die an staubexplosionsgeschützte Industriestaubsauger der Bauart 1 (zündquellenfreie Bauart) gestellt werden. Ein solcher Sauger darf nach den Explosionsschutzlinien in Zone 11 eingesetzt werden.

Diese sicherheitstechnischen Anforderungen sind vom berufsgenossenschaftlichen Institut für Arbeitssicherheit in St. Augustin erarbeitet worden und werden bei der GS-Zeichen-Prüfung herangezogen; sind also ausschlaggebend zur Erlangung des GS-Zeichens.

Weitere vorteilhafte Ausgestaltungen der Erfindung ergeben sich aus den Unteransprüchen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen - einschließlich der Zusammenfassung - offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellende Zeichnungen näher erläutert. Hierbei gehen aus den Zeichnungen und ihrer Beschreibung weitere wesentliche Merkmale und Vorteile der Erfindung hervor.

Es zeigen:
- Figur 1: eine Darstellung des kommutierten Motors mit Turbine gemäß der Erfindung, teilweise geschnitten,
- Figur 2: eine Ansicht der Turbine mit Ansaug- und Auslaßöffnungen,
- Figur 3: eine stirnseitige Ansicht der Motorturbinenanordnung gemäß der Erfindung mit Darstellung der Ansaug- bzw. Auslaßschlitze für Kühlluft,
- Figur 4: eine schematische Darstellung von Stator und Rotor des Motors im Längsschnitt mit Darstellung der Drehzahlregelung über einen Hallsensor,
- Figur 5: den Stator und Rotor nach Figur 4 im Querschnitt mit Darstellung der verengten Luftspaltausgestaltung,
- Figur 6: den Rotor mit dem Lüfterrad auf der Rotorwelle mit Darstellung der Lagerbereiche in einer Einzelteildarstellung,
- Figur 7: den Rotor mit Darstellung der konischen Halterung der Permanentmagnete in Detaildarstellung,
- Figur 8: eine stirnseitige Ansicht des Rotors nach Figur 7,
- Figur 9: das Schaltbild eines Frequenzumrichters für den Betrieb des kommutierten Motors nach der Erfindung.

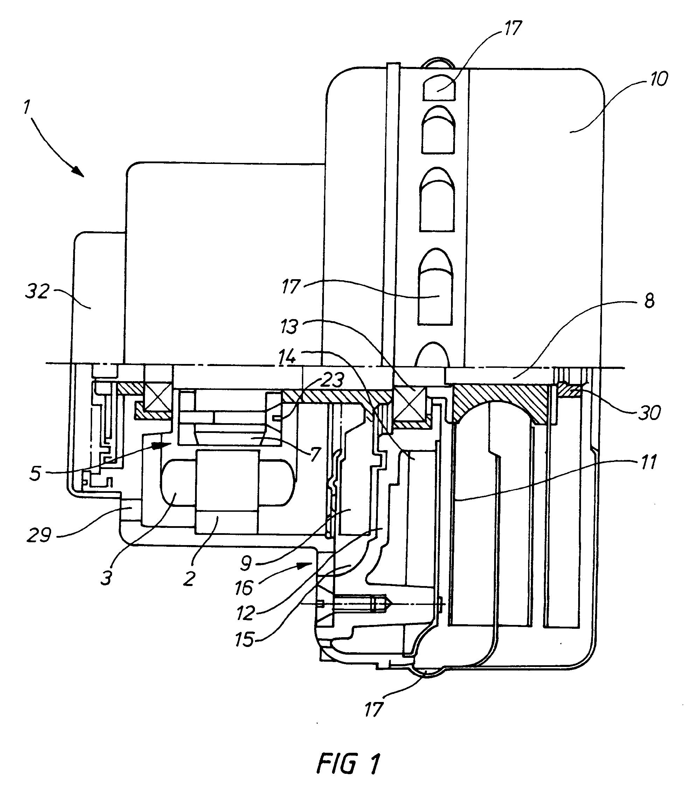

Aus Figur 1 ist der Motor 1 mit angesetzter Turbine 10 ersichtlich, wobei der Motor 1 aus Stator 2 mit Erregerwicklungen bzw. Statorwicklungen 3 besteht und aus einem Rotor 5.

Stirnseitig ist der Motor durch eine Abdeckung 32 abgedeckt und weist Ansaugschlitze 29 für Kühlluft auf, wobei ein Lüfterrad 9 die Kühlluft über die Ansaugschlitze 29 ansaugt und über Auslaßschlitze 16 ausbläst.

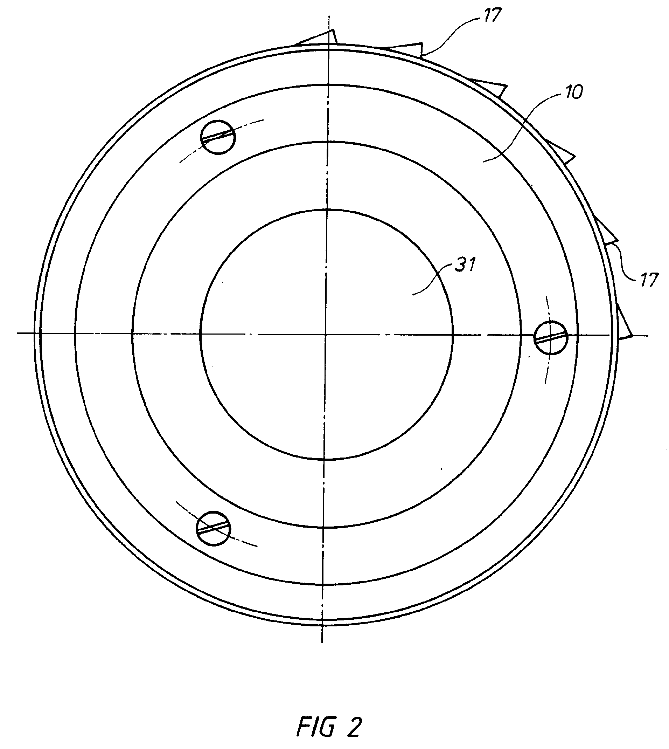

Auf der Rotorwelle 8 ist sowohl das Lüfterrad 9 gelagert als auch der Turbinenläufter 11 und zwar im Bereich der oberen Motorlagerung an einem durchgehend ausgebildeten oberen Lagerschild 12, welches in unmittelbarer Nähe der Lagerung für das Lüfterrad 9 eine Lagerung 13 für den Turbinenläufer 11 ausbildet. Am Umfang der Turbine 10 sind Auslaßöffnungen 17 vorgesehen, wobei nach Figur 2 der Ansaugluftstrom durch eine Ansaugöffnung 31 der Turbine eintritt. Im unteren Bereich ist die Turbine an einem unteren Lager 30 gelagert, welches wegen der Entfernung zum Motor ansich in Bezug auf Wärmeentwicklung nur gering belastet wird.

Das Lüfterrad 9 fördert die Kühlluft nach Art eines Ventilators über Auslaßschlitze 16 ins Freie und kühlt gleichzeitig auch das obere Lagerschild 12 für die Lagerung 13 des oberen Turbinenlagers, so daß eine übermässige Wärmeentwicklung dieser Lagerbereiche vermieden wird.

Das obere Lagerschild weist im Bereich des Turbinenläufers 11 im Querschnitt im Winkel zueinander verlaufende Ausnehmungen (14) auf, so daß in diesem Bereich die Abluft der Turbine vorteilhaft das Lagerschild 12 kühlt, wobei zusätzlich das Lagerschild durch das Lüfterrad 9 gekühlt wird, insbesondere in Verbindung mit einer abgerundeten Ausformung 15 im Lagerschild, an welcher die ausströmende Kühlluft entlang strömt. Das Lüfterrad 9 ist hierbei in Hinsicht auf die Lagerung in unmittelbarer Nähe des Turbinenläufers 11 angeordnet, und zwar im Bereich eines gemeinsamen oberen Lagerschildes 12, wodurch hier in Verbindung mit benachbarten Austrittsorten für die Kühlluft des Motors und die Abluft der Turbine eine besonders vorteilhafte Motor- bzw. Lagerkühlung erreicht wird.

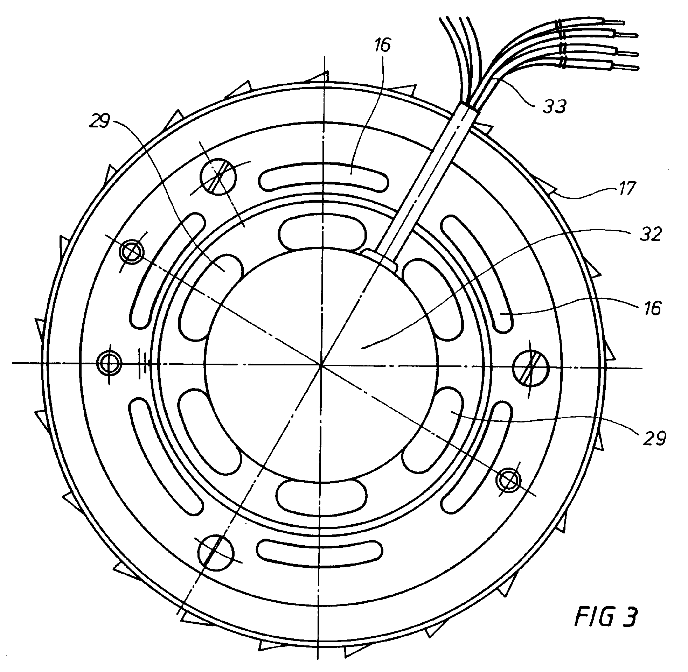

In Figur 3 sind in detaillierter Darstellung nach einer stirnseitigen Ansicht her die Ansaugschlitze 29 des Lüfterrades 9 für die Kühlluft des Motors dargestellt, sowie die stirnseitigen Auslaßschlitze 16 des Lüfterrades 9. In Verbindung mit der benachbarten Anordnung der Auslaßöffnungen 17 für die Abluft der Turbine 10 wird eine weitgehende gemeinsam wirkende Abluftführung von Kühlluft und Abluft erzielt, wobei die austretenden Luftströme sich gegenseitig mitreissen, was einer erhöhten Kühlung vom Motor bzw. der Lagerung zugute kommt.

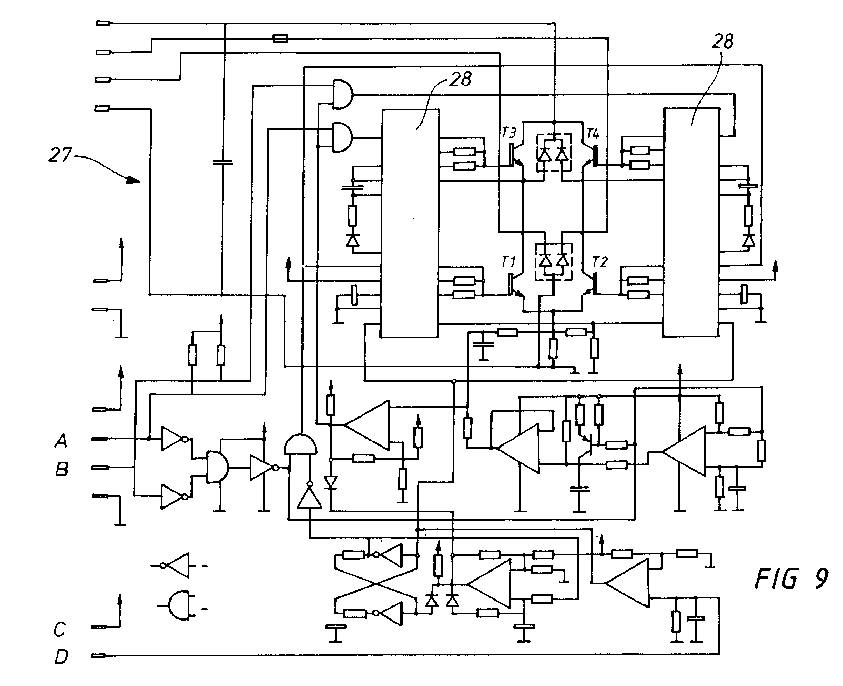

In Figur 3 ist weiterhin die stirnseitige Abdeckung 32 dargestellt, von der Anschlüsse 33 ausgehen bzw. münden, um dort den Frequenzumrichter nach Figur 9 anzuschließen.

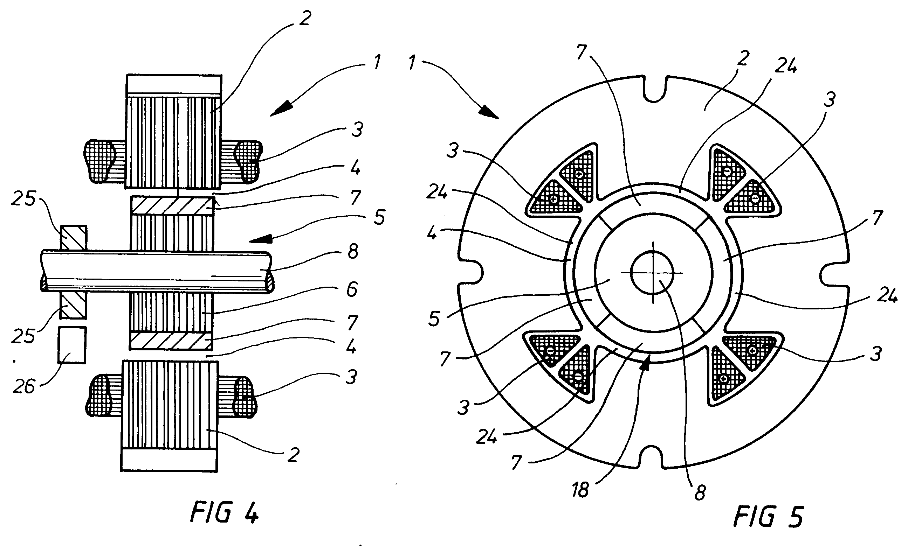

Die Figur 4 zeigt im Längsschnitt detailliert den Motor 1, bestehend aus Stator 2 und Rotor 5, wobei die Erregerwicklungen 3 und die paketweise Anordnung von Stator- und Rotorblechen (6) dargestellt ist. Der Rotor 5 bewegt sich im Bereich eines Luftspalts 4, wobei über dem Stator 2 Permanentmagnete 7 nach Art von Ringschalen auf dem Rotor angeordnet sind.

Im Bereich der Rotorwelle sind an dieser ein oder mehrere Permenentmagnete 25 angeordnet, denen ein Hallsensor 26 gegenüber steht, wodurch bei Drehung des Rotors 5 im Hallsensor 26 Impulse erzeugt werden, welche den Frequenzumrichter nach Figur 9 an den Eingängen C,D ansteuern.

Im Querschnitt der Motorenanordnung nach Figur 5 ist bei sonst nach Figur 4 gleichen Bezugszahlen insbesondere die Ausgestaltung des Luftspalts 4 ersichtlich, wobei von einer Statorwicklung 3 bis zur nächsten der Luftspalt 4 eine stetig zunehmende Verengung 24 durchführt, wodurch eine stets gleiche Anlaufrichtung des Motors erreicht wird.

Die Permanentmagnete 7 sind im Ausführungsbeispiel nach Figur 5 als Ringschalen (18) ausgestaltet und umgeben schalenförmig in Aneinanderreihung den Rotor 5. Die Anzahl der Permanentmagnete 7 richtet sich nach der gewünschten Polzahl in Verbindung mit den am Stator verteilt angeordneten Erregerwicklungen 3. Beim Ausführungsbeispiel nach Figur 5 sind bei vier Erregerwicklungen, die im übrigen dreiecksförmig innerhalb der Statornuten angeordnet sind, vier entsprechende Permanentmagnete 7 vorgesehen.

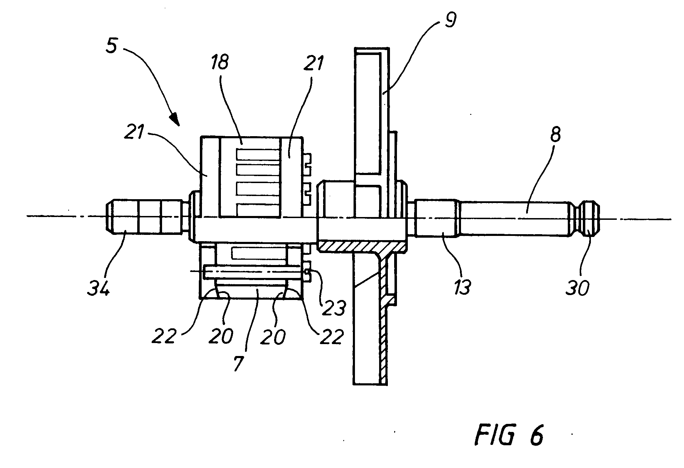

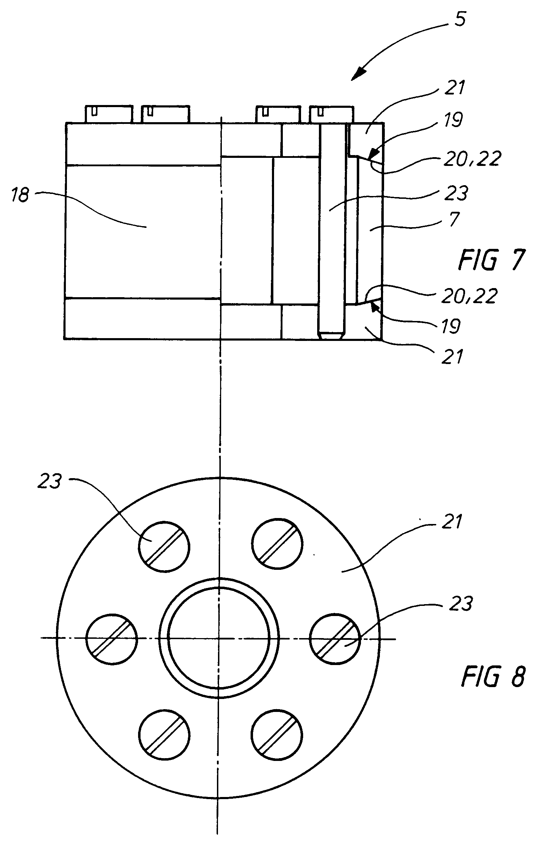

In Figur 6 ist in einer Detailzeichnung die Rotorwelle 8 mit dem Rotor 5 und dem Lüfterrad 9 dargestellt. Hierbei wird insbesondere in Verbindung mit Figur 7 die Ausgestaltung der Permanentmagnete 7 als Ringschalen 18 deutlich. Die Ringschalen 18 weisen an ihren Längsseiten konische Abschrägungen 20 auf, die sich in Richtung zur Rotorwelle hin erweitern.

Die stirnseitig am Rotor 5 angeordneten Deckel 21 weisen demgegenüber ebenfalls konische Abschrägungen 22 entgegengesetzter Neigung auf und umfassen im Randbereich des Rotors 5 die Permanentmagnete 7, so daß hierdurch auch bei höheren Drehzahlen ein sicherer Zusammenhalt des Rotors erreicht wird.

Nach Figur 7 werden die Deckel 21 im Randbereich von Klemmschrauben 23 durchgriffen, ebenfalls ersichtlich nach Figur 8, wodurch die Deckel 21 im Bereich der konischen Abschrägungen 22 einen sicheren Zusammenhalt mit den Permanentmagneten 7 eingehen, insbesondere in den Randbereichen, wo die Ringschalen 18 konische Abschrägungen 20 entgegengesetzter Neigung aufweisen.

Aus Figur 6 ist noch ersichtlich, daß auf der Rotorwelle im direkten Anschluß an das Lüfterrad 9 eine obere Lagerung 13 für die Turbine vorgesehen ist, wobei an dieser Lagerung 13 nach Figur 1 das obere Lagerschild 12 ansetzt und hier in Verbindung mit der Belüftung des Lagerschildes sowohl durch das Lüfterrad 9 als auch durch den Turbinenläufer 11 eine besonders vorteilhafte Kühlung des Motors, insbesondere der Erregerwicklung 3 und der Lageranordnung, insbesondere des oberen Lagers 13, erreicht wird. Die Rotorwelle 8 ist demnach in einem Lager 34 geführt, welches durch die Abdeckung 32 nach Figur 1 geschützt ist, und weiterhin ist das Lager 13 im Bereich des oberen Lagerschildes 12 angeordnet, wobei dieses Lager sowohl radial wirkende Kräfte des Lüfterrades 9 als auch vergleichbare Kräfte ausgehend vom Turbinenläufer 11, aufnimmt. Weiterhin wird der Turbinenläufer 11 im Bereich eines unteren Lagers 30 an der Rotorwelle 8 gehalten in Verbindung mit einem hier nicht näher dargestellten Lagerring.

Aus Figur 7 sind in der vergrößerten Detailzeichnung besonders deutlich die Längsseiten 19 der Permanentmagnete 7 ersichtlich, die im Bereich ihrer konischen Abschrägung 20 von gleichartigen Abschrägungen 22 entgegengesetzter Richtung ausgehend von den Deckein 21 gehalten werden.

In Figur 9 ist als Ausführungsbeispiel ein Frequenzumrichter 27 dargestellt mit einem Gegen-AB, wo über Inverter in Verbindung mit einer Vergatterung durch UND-Glieder die Ansteuerfrequenz Leistungstreibern, die im Gegentakt angeordnet sind, zugeführt wird.

Weiterhin wird über den Eingang C,D ein Regelimpuls, der vom Hallsensor 26 erzeugt wird, zugeführt, der im weiteren über Verstärkungsglieder verstärkt wird und nach einer Abfrage der Ansteuerfrequenz nach Art einer Regelung Steuereingängen der Endstufen 28 zugeführt wird. Die Endstufen 28 werden von einer nicht näher dargestellten Versorgungsspannung versorgt und steuern den Motor an ihren Ausgängen über Leistungstreiber T1, T2 bzw. T3 und T4 an. Weiterhin sind Schaltglieder zur Frequenzkompensation und zur Unterdrückung von Störungen bzw. Anschwingvorgängen vorgesehen. Durch Erhöhen bzw. Erniedrigen der Ansteuerfrequenz am Eingang des Frequenzumrichters kann der Motor in beliebige auch sehr hohe Drehzahlen gefahren werden, wobei über den Hallsensor 26 eine Nachregelung der erwünschten Drehzahl durch Ansteuerung der Endstufen 28 erfolgt.

## Patentansprüche

1. Elektronisch kommutierter Motor (1) für Staubsauger mit einem Stator (2) mit Erregerwicklungen (3) und mit in einem Luftspalt (4) drehend angeordneten Rotor (5), welcher paketiert Rotorbleche (6) und entsprechend der Polzahl des Stators (2) am Umfang Permanentmagnete (7) aufweist und weiterhin auf der Rotorwelle (8) ein Lüfterrad (9) eines Ventilators vorgesehen ist, wobei das Lüfterrad (9) dem Motor (1) in Ansaugrichtung der Kühlluft nachgeschaltet ist und die Rotorwelle (8) mit einer Turbine (10) zur Erzeugung eines Ansaugluftstromes in Verbindung steht, **dadurch gekennzeichnet**, daß das Lüfterrad (9) im oberen einstückig ausgebildeten Lagerschild (12) der Turbine (10) in unmittelbarer Nähe des Turbinenläufers (11) angeordnet ist, wobei das Lagerschild (12) in radialer Richtung nach außen Ausnehmungen (14) und Ausformungen (15) aufweist, in welche Luftströme des Lüfterrades (9) und des Turbinenläufers (11) je von einer Seite eingreifen, wobei vom Lagerschild (12) gleichzeitig die Auslaßschlitze (16) für Kühlluft des Lüfterrades (9) und die Auslaßöffnungen (17) für die Abluft der Turbine (10) ausgehen.

2. Elektronisch kommutierter Motor nach Anspruch 1,
**dadurch gekennzeichnet**, daß am Umfang des Rotors (5) nach Art von Ringschalen (18) Permanentmagnete (7) in Aneinanderreihung angeordnet sind, wobei die Längsseiten (19) der Permanentmagnete (7) eine konische Abschrägung (20) aufweisen und in Richtung zur Rotorwelle (8) konisch erweitert ausgebildet sind und hierbei die Permanentmagnete (7) an den Längsseiten (19) ringförmig von stirnseitigen Deckeln (21) des Rotors (5) umfaßt werden, die entsprechende konische Abschrägungen (22) entgegengesetzter Neigung aufweisen.

3. Elektronisch kommutierter Motor nach Anspruch 2,
**dadurch gekennzeichnet**, daß die stirnseitigen Deckel (21) des Rotors (5) in Randnähe von Klemmschrauben (23) durchgriffen werden, welche den Randbereich der Deckel (21) mit der Abschrägung (22) gegen die konische Abschrägung (20) der Permanentmagnete (7) pressen.

4. Elektronisch kommutierter Motor nach den Ansprüchen 1 und 2,
**dadurch gekennzeichnet**, daß der Luftspalt (4) zwischen dem Permanentmagneten (7) und dem Stator (2) in wechselnder Anordnung entsprechend der Polzahl des Stators verengt ausgebildet ist, wobei ausgehend von einer Erreger- bzw. Statorwicklung (3) bis zur darauffolgenden Wicklung eine stetig zunehmende Verengung (24) vorgesehen ist, um einen stets gleichen Anlauf des Motors (1) in Richtung der Verengung (24) zu erzielen.

5. Elektronisch kommutierter Motor nach Anspruch 1,
**dadurch gekennzeichnet**, daß an der Rotorwelle (8) eine oder mehrere Permanentmagnete (25) am Umfang angeordnet sind, wobei Regelimpluse gemäß der Rotation der Rotorwelle (8) über einen Hallsensor (26) einer Frequenzsteuerung zugeführt werden.

6. Elektronisch kommutierter Motor nach den Ansprüchen 1 bis 5,
**dadurch gekennzeichnet**, daß eine elektronische Kommutierung des Motors (1) in Verbindung mit einem Frequenzumrichter (27) vorgesehen ist, wobei eine Steuerfrequenz entsprechend der gewünschten Drehzahl und weiterhin Regelimpulse des Hallsensors (26) Eingängen (A,B) bzw. (C,D) des Frequenzumrichters (27) zugeführt werden und am Ausgang des Frequenzumrichters über im Gegentakt gesteuerte Endstufen (28) die Statorwicklungen (3) des Motors (1) der Reihe nach angesteuert werden.

## Claims

1. An electronically commutated motor (1) for vacuum cleaners, with a stator (2) with excitation coils (3) and with a rotor (5) rotatably arranged in an air gap (4), which has packed rotor laminations (6) and permanent magnets (7) on the circumference corresponding to the pole number of the stator (2) and, in addition, on the rotor shaft (8) a fan impeller (9) of a ventilator is provided, in which the fan impeller (9) is connected after the motor (1) in the direction of suction of the cooling air and the rotor shaft (8) is connected with a turbine (10) for the production of a suction air current, characterised in that the fan impeller (9) is arranged in the upper bearing plate (12) of the turbine (10), constructed in one piece, in the immediate vicinity of the turbine runner (11), in which the bearing plate (12) has recesses (14) and formed-out sections (15) in radial direction outwards, into which currents of air of the fan impeller (9) and of the turbine runner (11) engage, each from one side, in which there emerge from the bearing plate (12) at the same time the outlet slits (16) for cooling air of the fan impeller (9) and the outlet openings (17) for the exhaust air of the turbine (10).

2. An electronically commutated motor according to Claim 1,characterised in that on the circumference of the rotor (5) permanent magnets (7) are arranged, lined up adjacent to each other in the manner of annular sleeves (18), in which the longitudinal sides (19) of the permanent magnets (7) have a conical chamfer (20) and are constructed so as to be widened conically in the direction of the rotor shaft (8) and hereby the permanent magnets (7) on the longitudinal sides (19) are embraced in an annular manner by covers (21) of the rotor (5) on the end face, which have corresponding conical chamfers (22) inclined in the opposite direction.

3. An electronically commutated motor according to Claim 2, characterised in that the covers (21) of the rotor (5), on the end face, are penetrated close to the edge by clamping screws (23), which press the edge region of the covers (21) with the chamfer (22) against the conical chamfer (20) of the permanent magnets (7).

4. An electronically commutated motor according to Claims 1 and 2, characterised in that the air gap (4) between the permanent magnet (7) and the stator (2) is constructed so as to be constricted in alternating arrangement according to the pole number of the stator, in which, starting from an excitation or stator winding (3) up to the following winding, a continuously increasing constriction (24) is provided, in order to achieve a start-up of the motor (1) which is always uniform in the direction of the constriction (24).

5. An electronically commutated motor according to Claim 1, characterised in that one or more permanent magnets (25) are arranged on the circumference on the rotor shaft (8), in which regulating pulses are supplied according to the rotation of the rotor shaft (8) via a Hall sensor (26) of a frequency control.

6. An electronically commutated motor according to Claims 1 to 5, characterised in that an electronic commutation of the motor (1) is provided in connection with a frequency converter (27), in which a control frequency corresponding to the desired rotation rate and, in addition, regulating pulses of the Hall sensor (26) are supplied to inputs (A,B) or (C,D) of the frequency converter (27) and at the output of the frequency converter, via final stages (28) which are controlled in push-pull arrangement, the stator windings (3) of the motor (3) are controlled in turn.

## Revendications

1. Moteur (1) à commutation électronique pour aspirateurs, comportant un stator (2) pourvu d'enroulements inducteurs (3), et un rotor (5) monté en rotation dans un entrefer (4), qui présente, par paquets, des pales de rotor (6) et, en fonction du nombre de pôles du stator (2), à la périphérie, des aimants permanents (7), une roue (9) d'un ventilateur étant prévue sur l'arbre de rotor (8), étant précisé que cette roue de ventilateur (9) est montée en aval du moteur dans le sens d'aspiration de l'air de refroidissement, et que l'arbre de rotor (8) est en liaison avec une turbine (10) pour produire un courant d'air aspiré, caractérisé en ce que la roue de ventilateur (9) est disposée dans le flasque supérieur (12), réalisé d'une seule pièce, de la turbine (10), à proximité immédiate de la roue motrice (11) de la turbine, étant précisé que le flasque (12) présente, dans le sens radial vers l'extérieur, des creux (14) et des cavités (15) dans lesquels des courants d'air de la roue de ventilateur (9) et de la roue motrice (11) de la turbine agissent chacun d'un côté, les fentes de sortie (16) prévues pour l'air de refroidissement de la roue de ventilateur (9) et les ouvertures de sortie (17) prévues pour l'air d'échappement de la turbine (10) partant en même temps dudit flasque (12).

2. Moteur à commutation électronique selon la revendication 1, caractérisé en ce que des aimants permanents (7) sont alignés sur la périphérie du rotor (5) à la manière d'enveloppes annulaires (18), étant précisé que les côtés longitudinaux (19) des aimants permanents (7) présentent une inclinaison conique (20) et vont en s'élargissant en direction de l'arbre de rotor (8), et que les aimants permanents (7) sont entourés suivant une forme annulaire, au niveau desdits côtés longitudinaux (19), par des couvercles frontaux (21) qui présentent des inclinaisons coniques (22) correspondantes en sens inverse.

3. Moteur à commutation électronique selon la revendication 2, caractérisé en ce que les couvercles frontaux (21) du rotor (5) sont traversés, près de leur bord, par des vis de serrage (23) qui pressent la zone du bord des couvercles (21) présentant l'inclinaison (22) contre l'inclinaison conique (20) des aimants permanents (7).

4. Moteur à commutation électronique selon les revendications 1 et 2, caractérisé en ce que l'entrefer (4) entre les aimants permanents (7) et le stator (2) a une forme rétrécie de façon alternée, suivant le nombre de pôles du stator, étant précisé qu'il est prévu, à partir d'un enroulement inducteur ou de stator (3) jusqu'à l'enroulement suivant, un rétrécissement (24) de plus en plus grand afin d'obtenir un démarrage toujours égal du moteur (1) dans le sens du rétrécissement (24).

5. Moteur à commutation électronique selon la revendication 1, caractérisé en ce qu'un ou plusieurs aimants permanents (25) sont disposés sur la périphérie de l'arbre de rotor (8), des impulsions de réglage étant transmises à une commande de fréquence par l'intermédiaire d'un détecteur Hall (26), selon la rotation de l'arbre de rotor (8).

6. Moteur à commutation électronique selon les revendications 1 à 5, caractérisé en ce qu'une commutation électronique du moteur (1) est prévue en liaison avec un convertisseur de fréquence (27), étant précisé qu'une fréquence de commande est transmise à des entrées (A, B) et (C, D) du convertisseur de fréquence (27) en fonction de la vitesse de rotation souhaitée, ainsi que des impulsions de réglage du détecteur Hall (26), et qu'à la sortie du convertisseur de fréquence, les enroulements de stator (3) du moteur (1) sont déclenchés à tour de rôle par l'intermédiaire d'étages finals (28) commandés en push-pull.
